# EUROPEAN PATENT APPLICATION

(11) **EP 2 107 806 A1**
(43) Date of publication of application: **07.10.2009**
(21) Application number: 08006391.0
(22) Date of filing: 31.03.2008
(51) Int. Cl.: H04N 7/088, H04N 7/16

(54) **Transmitting video and additional information using the image transmission area of a transmission signal**

(71) Applicant: Harman Becker Automotive Systems GmbH, 76307 Karlsbad (DE)
(72) Inventor: Saier, Horst, 78147 Vöhrenbach (DE); Sagcob, Thomas, 78166 Donaueschingen (DE); Hauger, Lothar, 78166 Donaueschingen (DE)
(74) Representative: Grünecker, Kinkeldey, Stockmair & Schwanhäusser Anwaltssozietät

(57) **Abstract**

The present invention provides an improved method for the combined transmission of image and additional data. The present invention generates a transmission signal that includes an image transmission area, which is applied for the transmission of both the image and additional data. In order to transmit image and additional data without interference between these different kinds of data, the present invention takes the resolution of a display device that displays the transmitted video data into account when generating the transmission signal. In particular, the size of the transmission area is set so that it provides more space than actually is required for the transmission of an image having a resolution matching the resolution of the display device. Therefore, it is not necessary to superimpose the additional data onto the image data or to transmit image having a resolution being smaller than the resolution of the display device.

## Description

The present invention relates to the distribution of broadband content and data. More particularly, the present invention relates to the combined transmission of video data and additional data.

To distribute data within vehicles and buildings or to transmit data from one building to others, several different data transmission methods, such as low-powered radio, optical, or infrared transmission techniques, have been developed. US 2005/023112, for example, describes the zonal transmission of data by the modulation of the light output of arc or discharge lamps. In addition, e-mails are now widely used to send and receive data over the Internet.

### However, each of these methods has some drawbacks:

Although radio transmission is mostly transparent to walls and thus is suitable for the transmission of data within buildings or blocks of buildings, using radio transmission requires licensing. In addition, it is difficult to ensure that the reception of the signals is confined within a certain area.

Infrared on the other hand is not transparent to walls. Therefore, special infrastructure comprising a plurality of repeaters is needed to provide sufficient coverage of a building. However, installing and maintaining such a system of repeaters is both extensive and expensive.

Although e-mail communication offers the greatest possibility of transmitting information to a plurality of users, an extensive amount of hardware is needed in order to enable e-mail communication. In particular, a server that manages the transmission of the data has to be provided. Therefore, using e-mail communication in small and independent systems, such as the entertainment system of a car or the security system of a building, is not applicable. Further, e-mails do not offer the possibility of continuously transmitting data, such as streaming data.

A further method for transmitting information to a wide range of recipients has been introduced in the field of television broadcasting. In the field of television broadcasting the most common television standards are NTSC, PAL, and SECAM. These standards differ not only in the application of color encoding methods but also in the number of lines per frame. NTSC is based on frames with 525 lines transmitted at a field rate of 60 Hz, while both PAL and SECAM use 625 lines per frame transmitted at a field rate of 50 Hz.

However, when talking about transmitted lines, one has to bear in mind, that the signals that contain the actual image information are interrupted by vertical and horizontal blanking periods in which no video signals are transmitted. In particular, the numbers of 525 and 625 lines per frame relate to the transmitted lines, whereas the number of active video lines, i.e. lines that contain the actual image data, is smaller. The active image area only includes approximately 575 lines for PAL and approximately 487 lines for NTSC.

Many display devices comprise a graphic controller that digitally samples the transmitted image data and stores the sampled data in a framebuffer. Since such a graphic controller does not require the data contained in the blanking periods, the graphic controller only decodes the data transmitted in the active area, i.e. contained in the active video lines. Therefore, the active area is often also referred to as decodable area. As the active or decodable area is used for the transmission of image data, the term "image transmission area" will be used in the following for these areas.

The blanking periods are employed for delimiting frame boundaries for vertical synchronization and for the transmission of supplementary information, such as videotext. Therefore, a TV station using the blanking periods for the transmission of data can supply a wide range of users with video and additional data.

However, the usage of the blanking periods is standardized, which severely restricts the kind of data that can be transmitted in the blanking periods. In particular, decoders are configured to extract specific data from predetermined standardized parts of the blanking periods, which on the other hand causes receivers to work improperly if the data distribution within the blanking periods is modified or new data, which is not compatible with the standards, is inserted into the blanking periods.

In order to overcome the restrictions imposed by the standardization of the blanking periods, several methods have been proposed that insert additional data into the visible parts of the video signal, i.e. into those parts of the video signal that are visible on a TV screen. US 3,996,861, for example, describes a system for communicating binary-coded, digital messages that inserts the digital messages into the visible part of the signal. In order to extract the transmitted messages, a user has to scan the displayed image with decoding equipment comprising light sensors that optically read the superimposed messages from specific areas on a TV screen.

Although the system permits the transmission of digital messages based on conventional television broadcasting systems, it has the drawback that a viewer manually has to scan the TV screen with decoding equipment to extract the data. In addition, viewers who are not interested in the transmitted messages are annoyed since the transmitted additional data is visible on the screen, which reduces the quality of the transmitted image signal.

Other methods split the visible part into two areas to separate the image and the additional data. In the first area only image data is transmitted, while the second part is used for the transmission of the additional data. However, such transmission techniques have two major drawbacks. Although the additional is separated from the image data, the additional data is visible on the TV screen, which annoys viewers who are not interested in the additional data. In addition, since the image data has to be reduced in size to open space for the transmission of additional data, the size of transmitted image is smaller than the resolution of the display. Therefore, the transmitted image does not fill the complete TV screen, and a viewer cannot enjoy the image data at its best quality.

As can be seen from the above-described examples, the transmission of additional data using television based transmission systems is severely restricted. Either the additional data is limited to particular kinds of data, such as videotext, or the additional data interferes with the transmitted image data.

Therefore, it is an object of the present invention to provide a data transmission system and method that allows for easy and efficient transmission of image and additional data to recipients without interference between the transmitted additional and image data.

This is achieved by the features of the independent claims.

The present invention provides a data transmission method and a data transmission system that transmit video data and additional data in form of a sequence of images, wherein each image of the image sequence has a resolution that corresponds to the resolution of a display device, which displays the transmitted image data. For the transmission of the video and additional data, the present invention generates a transmission signal that provides a predefined image transmission area for each image of said image sequence. In order to prevent interference between the video and the additional data, the size of each of said image transmission areas is chosen to be larger than the respective image of said image sequence. In particular, the image and additional data are inserted into predefined part of said image transmission area. The receiving apparatus extracts the video data from the transmission signal for further display of the video data on said display. In addition, the additional data is extracted from the transmission signal for further processing of the extracted additional data.

The present invention allows for the combined transmission of two different kinds of data - image and additional data - in a single transmission signal. The image transmission area acts as a kind of a container that provides enough space to transmit additional data and images having a size that corresponds to the resolution of the display without the need for superimposing the additional data on the images. In particular, since the transmitted image data does not contain the additional data, a user viewing the transmitted images is not compelled to see the transmitted additional data. In addition, since the image transmission area provides more space than is actually needed for the transmission of the images, it is not necessary to reduce the size of the images to clear space for the transmission of the additional data. Therefore, the images can be transmitted having optimal image quality. Due to the separation of the image and additional data, a receiver can easily extract the transmitted image and additional data from the image transmission area and forward the data for further independent processing thereof. Therefore, a viewer watching the transmitted image data can view the images in best quality and will not be aware that additional data has been transmitted along with image data.

The image data and the additional data are preferably provided in form of two-dimensional pixel data arranged in column and lines. Preferably, each image transmission area is divided such that a first predefined number of lines of pixel data is provided for image data and a second predefined number of lines of pixel data of each transmission area is provided for additional data.

As described above, the size of the transmitted images corresponds to the resolution of the resolution of the display device. However, it might happen that a user captured the video data he wants to transmit with a video camera having a resolution that does not match the resolution of the display integrated or connected to a receiver. In addition, the user might want to transmit image data stored on a BD-ROM, which has a differing resolution. In order to make it possible to use the present invention for video data having arbitrary resolution, the present invention preferably adjusts the size of the images that should be transmitted before the transmission signal is generated. Therefore, the user is not forced to record the video data with a camera having a specific resolution or to manually adjust the resolution of recorded video data.

When a user watches the transmitted image data, it might happen that the displayed image does not change. For example, a security camera might be used to monitor a corridor that is hardly used, which leads to the continuous transmission of identical images. However, during the transmission of the video data, it might happen that the transmission signal suddenly freezes, i.e. the transmission interrupts and the display device continuously displays the same picture. In order to enable a person viewing the transmitted video data to identify a freeze of the transmitted image data, the present invention preferably generates a counting value for each image and transmits the counting value as additional data. By evaluating the transmitted counting values a signal freeze can be identified. Preferably, the transmitted counting values are compared with each other and a signal freeze is identified if the counting values do not change for a predefined period of time.

Due to the size of the image transmission area it is possible to separate the image data and the additional data both physically and with respect to their content. In particular, it is not required that the additional data is connected to the image data at all, which makes it possible that arbitrary kinds of additional data can be transmitted. Preferably, the additional data comprises text information, which, for instance, can be displayed on a display device. For example, the additional data may comprise headlines or minor pieces of news, which are displayed on a small screen space of the display device as a news ticker (sometimes also referred to as a "crawler"). Since the additional data is separated from the image data, it is not necessary to display the image data and the text information on the same display device. Therefore, the present invention preferably displays the transmitted text information on a separate display device that does not display the transmitted video data.

In order to increase the security of the data transmission, i.e. to prevent unauthorized persons from viewing the transmitted video data, the present invention preferably encodes each image of the image sequence before transmitting the image data. To simplify the image decryption at the receiver, the decryption key needed for the decryption of the images is transmitted along with the video data as additional data.

However, this way of transmitting encrypted data only provides intermediate security since an unauthorized person using special equipment might be able to extract the decryption key from the transmission signal. In order to further increase the security of the data transmission, the present invention preferably encrypts the decryption key to be transmitted as additional data. In this case the transmitted decryption key is decrypted before the image data is decrypted with the decryption key. Therefore, an unauthorized person who is able to extract the encrypted key from the transmission signal is not able to decrypt the encrypted key and thus to decrypt the transmitted image data.

Additional objects and advantages of the present invention will be set forth in the description which follows, and in part will be obvious from the description, or may be learned by practice of the present invention.

It is to be understood that both the foregoing general description and the following detailed description are exemplary, and are intended to provide further explanation of the invention as claimed.

The accompanying drawings are included to illustrate embodiments of the present invention and, together with the general description given above and the detailed description of the embodiments given below, to provide a further understanding of the invention and serve to explain the principles of the present invention in which:
- Fig. 1: shows a schematic block diagram of a transmitter according to the present invention.
- Fig. 2: shows a schematic block diagram of a receiver according to the present invention.
- Fig. 3: shows an exemplary separation of the image transmission area according to the present invention into a first part containing additional data and a second part containing image data.
- Fig. 4: shows a schematic block diagram of a transmitter according to the present invention comprising image data and additional data generating means.
- Fig. 5: shows a schematic block diagram of a receiver according to the present invention comprising image and additional data processing means.
- Fig. 6: illustrates a transmission system according to the present invention that transmits counting values as additional data.
- Fig. 7: illustrates a further transmission system according to the present invention that transmits counting values as additional data.
- Fig. 8: illustrates a transmission system according to the present invention that transmits text information as additional data.
- Fig. 9: illustrates a transmission system according to the present invention that encrypts the image data included in the transmission signal.
- Fig. 10: illustrates a further transmission system according to the present invention that encrypts the image data included in the transmission signal

Illustrative embodiments of the present invention will now be described in detail with reference to the attached drawings. Wherever possible, the same reference numbers are used in the drawings and the description in order to refer to the same or like parts.

In television transmission signals, the transmission signal is made up of frames each comprising at least one image transmission area that contains the transmitted video image data and blanking intervals. While the image transmission areas contain luminance and chrominance information of the transmitted image data, the blanking intervals include, for example, synchronization data or videotext. As can be seen, only parts of a frame are used for the transmission of image data. In addition, although an image transmission area might be configured to transmit the image data in a two-dimensional pixel array, which contains, for example, 487 lines, a conventional TV screen might not display the image data contained in all 487 lines. For example, the casing of many television sets covers parts of the television picture tube and therefore several active video lines are hidden and a user cannot see them. Moreover, a plurality of conventional video recorders record only 480 lines instead of all 487 lines of the image transmission area. Since such video signal-processing devices neglect the image data contained in certain lines of the image transmission area, it is actually not necessary to transmit the image data contained in these lines. In particular, these lines, which are normally used to transmit image data, could be utilized to transmit data, which might otherwise be incompatible or unrelated to the transmitted video signal. In addition, since the neglected lines are not recorded or displayed, those viewers who are not interested in the additional data would not be aware that such data is contained in the transmitted signal, while a user interested in the additional data could extract the transmitted additional data using special equipment.

However, as can be seen from above, the invisibility of the additional data crucially depends on properties of the target device that displays or records the transmitted data. Since the properties of these devices differ from device to device, the transmitted data might be visible on some screens. In addition, since the casing of a TV set only overlaps parts of the displayed image data, a misalignment of a control unit that controls the display of the image data on the screen could make the transmitted additional data visible.

Motivated by these observations, the present invention applies an approach for the transmission of additional data that avoids the above-mentioned problems.

Instead of assuming that a receiving device might not display some of the active lines, the present invention generates a transmission signal that provides an image transmission area being large enough to enable the transmission of images having a size that is greater than the resolution of the display device displaying the transmitted signal, but only transmits images having a size that matches the resolution of the receiving display device. Therefore, the image data included in the image transmission area does not fill the whole space, which makes it possible to use the part of the image transmission area that is not occupied by image data for the transmission of additional data.

Since the image transmission area provides more space than is required for the transmission of image data having a resolution that matches the resolution of the display device, it is possible to transmit both image data having a size that is equal to the display capabilities of the display device and additional data in one image transmission area without interference between the additional and the image data. As can be seen, the image transmission area acts as a container that transports image and additional data separated from each other.

In order to emphasize the particular approach of the present invention, this aspect is exemplarily illustrated in connection with the transmission standards ITU-R BT.656-3 and ITU-R BT.656-4.

Between Revision 3 and Revision 4 of the ITU-R BT.656 standards, the ITU has changed the toggling position of the V synchronization bit within the SAV EAV codes for NTSC. The position of the SAV moved from line 20 for the first field and from line 283 for the second field (ITU-R BT.656-3 standard) to the line 10 for the first field and to the line 273 for the second field (ITU-R BT.656-4 standard). Due to this change, the ITU-R BT.656-4 provides 10 additional visible lines, i.e. lines that can be used to transmit image data. However, if the resolution of a display device conforms with the ITU-R BT.656-3 standard, the display device will not be able to display all visible lines provided by the ITU-R BT.656-4 standard. Since such a display device will not display the additional visible lines of the ITU-R BT.656-4 standard, these additional lines can be used for transmitting additional data as, for instance, video content or other useful data. In order to utilize this increase in visible lines for the transmission of additional data, a sender might use the ITU-R BT.656-4 standard for the transmission of image and additional data and put the additional data between line 10 and line 19. If a receiver is configured to decode the video transmission from line 10 and to forward only the video content beginning from line 20 to a display device, the data contained between lines 10 and 20 can be further processed but is not visible to the user. In addition, since the transmitted image data has a resolution that conforms with the resolution of the display device, the image data is transmitted with optimal quality with respect to the resolution of the display device. However, it should be kept in mind that this movement of SAV reduces the space for the possible videotext content / closed caption or other services, which could be inserted before the SAV.

In the following a transmission system for the combined transmission of image and additional data according to the present invention will be described. The transmission system comprises a transmitter for generating and transmitting a transmission signal containing image and additional data and a receiver for processing the received image and additional data. In particular, the receiver extracts the transmitted image data for further display on a display device included in or connected to the receiver.

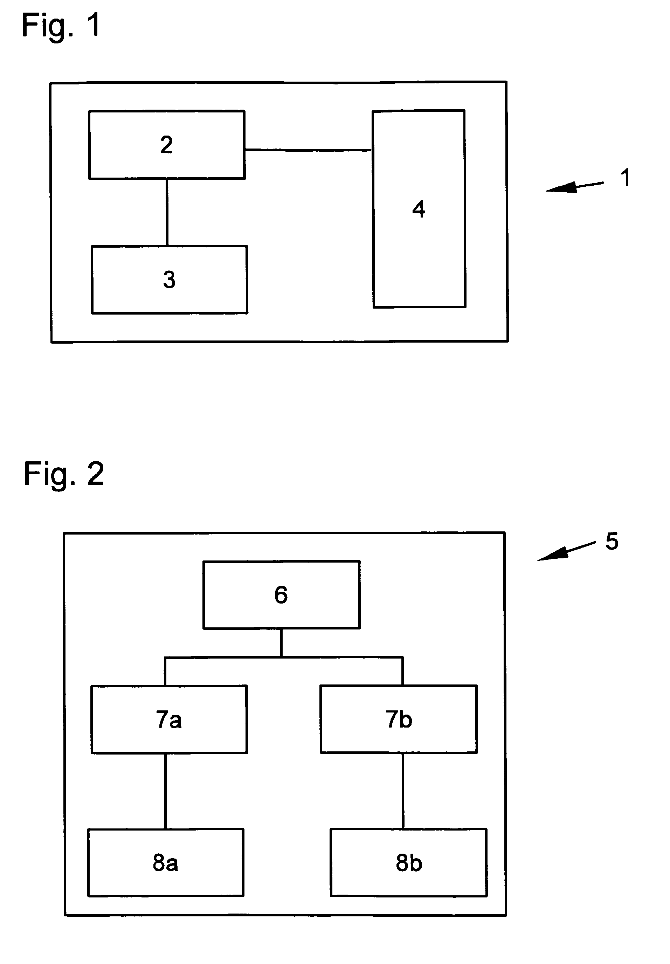

Figure 1 shows an exemplary block diagram of a transmitter 1 according to the present invention. The transmitter 1 comprises a generating unit 2 for generating a transmission signal, a transmitting unit 3 for transmitting the generated transmission signal and a connecting unit 4 for connecting the generating unit to external devices, such as a video camera.

The transmitter 1 receives video and additional data through the connecting unit 4 and forwards the received data to the generating unit 2. The images contained in the video data have a resolution that matches the resolution of the display device that later displays the transmitted images. Based on the received data, the generating unit 2 generates a transmission signal that provides for the transmission of each image of the received video data an image transmission area. The size of each image transmission area is set such that it makes more space available than is actually required to transmit images having a resolution that matches the resolution of the display device showing the transmitted images. For example, if the resolution of the display device is 640x480 and the image data and additional data is transmitted in form of two-dimensional pixel data arrayed in columns and lines, the size of the image transmission area is chosen such that it provides more than 480 lines, each having 640 columns, for the transmission of the additional and image data.

To insert the additional data and the image data into the image transmission area, the generating unit 2 first separates the image transmission area into two or more sub areas that are employed for the transmission of image and additional data, respectively, and inserts the image and the additional data into the respective parts of the image transmission area. Although the above-described processes might suggest that the generating unit 2 first generates a transmission signal having empty image transmission areas and afterwards inserts the image and additional data into the image transmission areas, the present invention is not restricted to such a sequence of actions. It is also possible, that the generating unit inserts the image data and the additional data during the generation of the transmission signal.

In order to transmit the generated transmission signal, the generated transmission signal is supplied to the transmitting unit 3. Depending on the usage of the transmitter several different embodiments of the transmitting unit 3 are possible.

For example, in order to use the transmitter 1 in cable connected transmission systems, the transmitting unit 3 may comprise an interface for connecting transmission cables to the transmitter 1. Alternatively, the transmitting unit 3 may comprise an antenna for transmitting the transmission signal via radio waves. However, the transmitting unit 3 is not restricted to these embodiments. For short distance transmission, an infrared output device could be used to transmit the transmission signal via infrared signals. In addition, the transmitting unit 3 might comprise a combination of the above-described transmission devices.

Figure 2 depicts an exemplary receiver 5 according to the present invention. The receiver comprises a receiving unit 6 for receiving transmission signals, a first extraction unit 7a for extracting video data and a second extraction unit 7b for extracting additional data from the received transmission signal. In addition, the receiver 5 comprises connectors 8a and 8b for connecting the receiver 5 to external devices, such as a display device or a data processing unit.

The receiving unit 6 forwards the received transmission signal to the extraction units 7a and 7b, which extract the image and the additional data from the image transmission areas, respectively. The first extraction unit 7a supplies the extracted video data to connector 8a, which forwards the received video data to an external device. Likewise, the second extraction unit 7b extract additional data from the transmission signal and forwards the extracted data to connector 8b.

Although Figure 2 shows a receiver 5 having two extraction units 7a and 7b, the present invention is not restricted to this particular configuration. Alternatively, the receiver 5 may comprise only a single extraction unit 7, which extracts both the image and the additional data. Likewise, the receiver 5 may comprise only a single connecting unit 8, which connects the receiver to external devices that process and/or display the transmitted data.

The receiving unit 6 my comprise an antenna for receiving signals transmitted by radio waves or an interface for connecting the receiving unit 6 to a wired transmission system. Alternatively, the receiving unit 6 may comprise an infrared sensor to receive infrared signals. However, in order to increase the applicability of the receiver 5, the receiving unit 6 can comprise a combination of the above-mentioned reception means. In addition, the receiving unit 6 may comprise other reception means.

The connectors, depicted in Figures 1 and 2, may connect the transmitter 1 and the receiver 3 via cable to external devices. Alternatively, the connectors may comprise an antenna for wireless data transmission, such as, for example, radio waves or infrared. However, in order to increase the applicability of the transmitter 1 and the receiver 5, the connectors can comprise a combination of the above-mentioned connection means.

In order to identify which sub areas of the image transmission areas contain image data and which parts contain additional data, the generating unit 2 may add a list, which identifies the parts of the image transmission area containing image data and additional data, respectively, at the beginning or at a different position of the image transmission area. In case the image transmission area is separated into a sequence of signal lines, such a list merely could comprise those lines that correspond to the first and the last signal line that contain image data or additional data. However, in case the image transmission area is not separated into lines, the list could comprise pointers that indicate the beginning and the end of the image data.

Alternatively, the generating unit 2 could insert specific signals that indicate the start or the end of image data into the image transmission area. For instance, the standardized signals SAV or EAV with its specific coding could be used for this purpose. However, new signals, known by the sender and the receiver, could also be defined and inserted in the transmission stream.

By using a list or specific signals that identify the partition of the image transmission area, it is possible to amend this partition after each or even during the transmission. For example, if the resolution of the display device showing the transmitted video data is changed or a new display device is connected to the receiver 5, the transmission signal can be adapted to the new resolution by amending the list or the specific signals.

However, if no flexibility in the partition of the image transmission area is needed, the transmitter and the receiver can be configured to insert the image and additional data into or to extract from fixed parts of the image transmission area. For example, if the image and additional data is transmitted in form of a two-dimensional pixel matrix, the transmitter may be configured to use a first number of predefined lines for the transmission of the image data and a second number of lines for the transmission of additional data. Likewise, the receiver may be configured to extract the image and the additional data from the first and second number of predefined lines, respectively. In this case, the transmission of specific information identifying the separation of the image transmission area is not necessary. In addition, the transmitter and the receiver might be configured to use a predefined partition of the image transmission area if no list or specific signals are contained in the transmitted signal.

However, a skilled person is aware that the present invention is not restricted to the above-mentioned techniques and other techniques exist that can be used to identify those parts of the image transmission area that contain image and additional data, respectively.

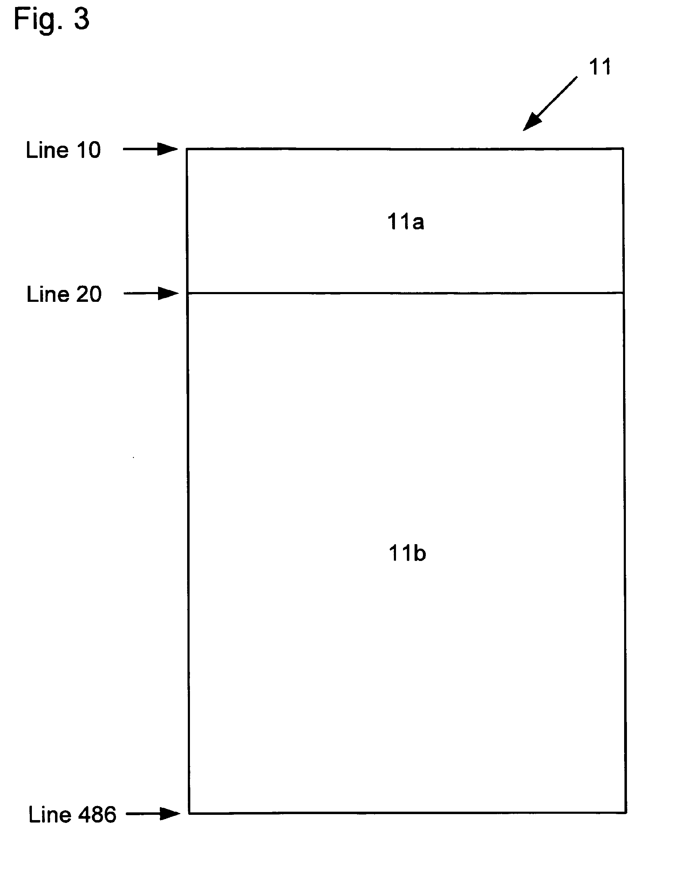

Figure 3 shows an exemplary partition of the image transmission area for a display device being capable of displaying 552 lines. For the sake of simplicity, Figure 3 does not take into account that the transmission signal might consist of fields, each field consisting of two consecutive frames. As can be seen in Figure 3, the image transmission area 11 complies with the NTSC standard and comprises 486 active video lines per frame. The image transmission area is divided into two sub areas 11 a and 11b. The first sub area 11 a extends from line 10 to line 19 and contains additional data, while the second sub area 11 b extends from lines 20 to line 486 and includes the image data. Although the lines 10 to 19 are reserved for additional data, it is not required that additional data fills the whole sub area 11 a. Depending on the size of the additional data to be transmitted, only a portion of the 10 lines may contain additional data, while the remaining part of sub area 11a does not include data. In particular, sub area 11a might not comprise any additional data if not additional data is to be transmitted with the corresponding image.

Based on one of the above-described partitions of the image transmission area, the extraction of data contained in the image transmission area can be performed in several different ways. For example, if the image transmission area contains a list that identifies those parts of the image transmission area that contain image and additional data, respectively, the data is extracted from the respective sub areas of the image transmission area identified in the list. For example, if the list identifies the lines that contain image or additional data, the first extraction unit 7a extracts the image data from those lines that correspond to the image data, while the second extraction unit 7b extracts the additional data from the remaining lines of the image transmission area.

In case the separation of the image transmission area identified by specific signals contained in the image transmission area, the extraction unit or units detect the position of the specific signals and extract the image and additional data, respectively, as indicated by the position of the specific signals.

In addition, if the partition of the image transmission area is fixed, i.e. predefined, the extraction units extract the image data and the additional data from the predefined parts of the image transmission area. For example, if the image and additional data is transmitted in form of two-dimensional pixel data and it is predefined that the first 22 lines contain the additional data, the second extraction unit extracts the data contained in the first 22, while the first extraction unit extracts the data from the remaining lines.

Due to the separation of the image transmission area, the image and the additional data can be processed independently from each other. Therefore, it is possible to display the image data without any interference of the additional data. However, if the transmitted data should be used to modify the transmitted image data, the extracted additional data can still be applied to manipulate the transmitted image data. Consequently, the image data can be transmitted without loss of quality or superimposed additional data, while it is still possible to alter the image data using the additional data if wanted.

The transmitter 1, as depicted in Figure 1, generates a transmission signal based on image and additional data received from external devices. Since the size of the image data that is inserted into the transmission signal has to match the resolution of the display device that shows the transmitted image data, the resolution of the image data received through the connecting unit 4 must have a specific resolution. Therefore, a person generating the image data either has to use a camera with a specific resolution or must resize image data to make it match the resolution of the display.

In order to enable the transmitter 1 to transmit image data generated with video equipment having an arbitrary resolution, the transmitter 1 preferably comprises a resize unit (not shown) for resizing the image data obtained from an external device. The resize unit receives the image data from the connecting unit 4 and, if necessary, adapts the size of the image data to the resolution of the display device. After the resize process, the resize unit forwards the amended image data to the generating unit 2.

The transmitter 1, as depicted in Figure 1, generates the transmission signal based on data obtained from external devices. However, in many cases it is advantageous if the transmitter 1 generates the image and/or the additional data itself. To improve its applicability, the transmitter 1 may comprise, instead or in addition to the connecting unit 4, an image data generating unit and/or an additional data generating unit. However, it is also possible that the transmitter 1 comprises, instead or in addition to the connecting unit 4, only a single data generating unit, which generates both additional and image data.

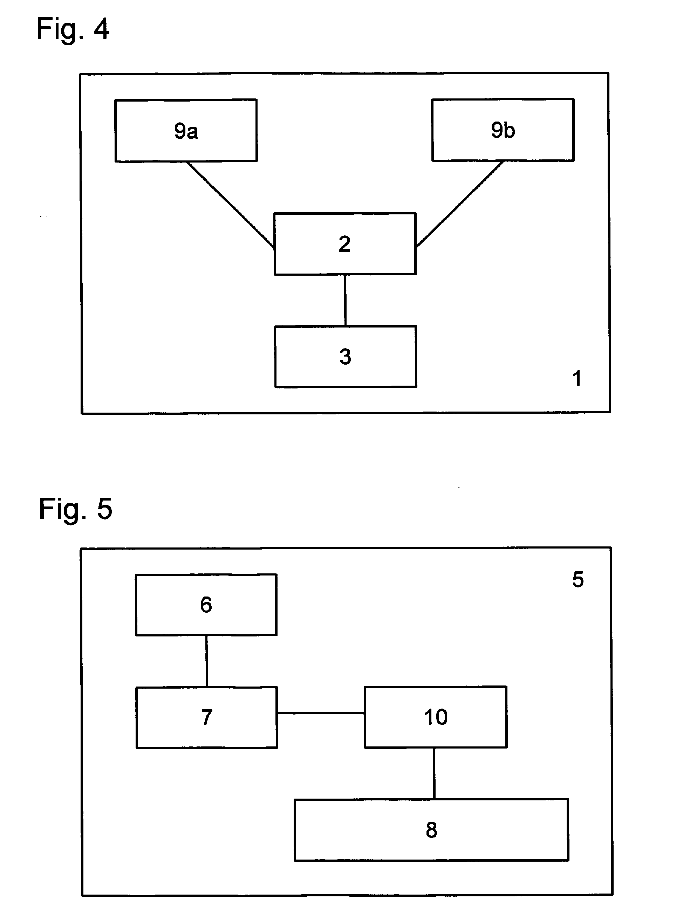

Figure 4 shows a transmitter 1 according to the present invention that comprises an image data generating unit 9a, such as a video camera, and an additional data generating unit 9b instead of the connecting unit 4. Since the image data generating unit generates the image data that is inserted into the transmission signal, an additional camera for generating the image data is not required. The image data captured by the image capturing unit 9a and the additional data generated by the data generating unit 9b are forwarded to the generating unit 2, which inserts the image and the additional data into the transmission signal.

Likewise, in order to improve the applicability of the receiver 5, the receiver 5 preferably comprises, instead or in addition to the connectors 8a and 8b, an image data processing unit for processing the image data and/or an additional data processing unit for processing the additional data. In addition, the receiver 5 might include, instead or in addition to the connector 8a, a display device that displays the transmitted image data.

Figure 5 shows a receiver 5 that comprises a receiving unit 6, a data extracting unit 7 for extracting both image and additional data, a data processing unit 10, which processes both the image and the additional data received from the extracting unit 7, and a connecting unit 8 for forwarding the processed data to an external device. As can be seen in Figure 5, it is not necessary that the receiver 5 comprises separate image data and additional data processing means.

In the following illustrative embodiments of the present invention will be described that exemplarily show the transmission of particular kinds of additional data. In these embodiments the transmitter and the receiver are supposed to be a video unit and a main unit, respectively. However, as a skilled person is well aware, that the present invention allows for the transmission of arbitrary image and additional data and thus is not restricted to the kinds of data transmitted in the following examples. In addition, the main unit and the video unit are illustrative embodiments of transmitters and receiver, and the present invention is not restricted to these particular embodiments.

In the following a camera 12 is supposed to be connected via cable to the video unit. However, the video unit may receive the video data by any other means, such as, for example, wireless transmission. In addition, it is not necessary, that the video unit receives the image data from a camera. The image data may also be obtained from other external devices or read from an internal or external storage medium, such as, for instance, a DVD-ROM or a hard disk.

In transmission system, such as television broadcasting systems, the transmission of video signals might suddenly be interrupted. For example, a video unit transmitting video signals might stop its operation due to a failure or the video unit might be disconnected from a receiving unit. In addition, it might happen that due to an internal failure in the video unit the transmitted signal freezes, i.e. the video unit constantly transmits the same image data. In all the above-mentioned cases, the interruption of the transmission or the malfunction of the video unit will result in a frozen signal, which causes a main unit that receives signals from the video unit to constantly output the same image.

However, there might be other reasons why the transmitted image data is not changing. For example, if the video unit is connected to a security camera that is installed in an infrequently used room, the image signal recorded by the security camera will hardly change and thus the image on the display will stay the same for most of the time. On the other hand, an intruder might have manipulated the surveillance system to cause a signal freeze and thus to hide his activities by continuously transmitting identical image data.

Therefore, a guard watching the displayed image will not be able to tell if a nonchanging image results from a malfunction of the video or main unit or if the image captured by the security camera itself is not changing. In addition, the guard will not recognize if an intruder has tampered with the surveillance system. In order to solve problems of this kind, the present invention preferably transmits counting values assigned to the images as additional data.

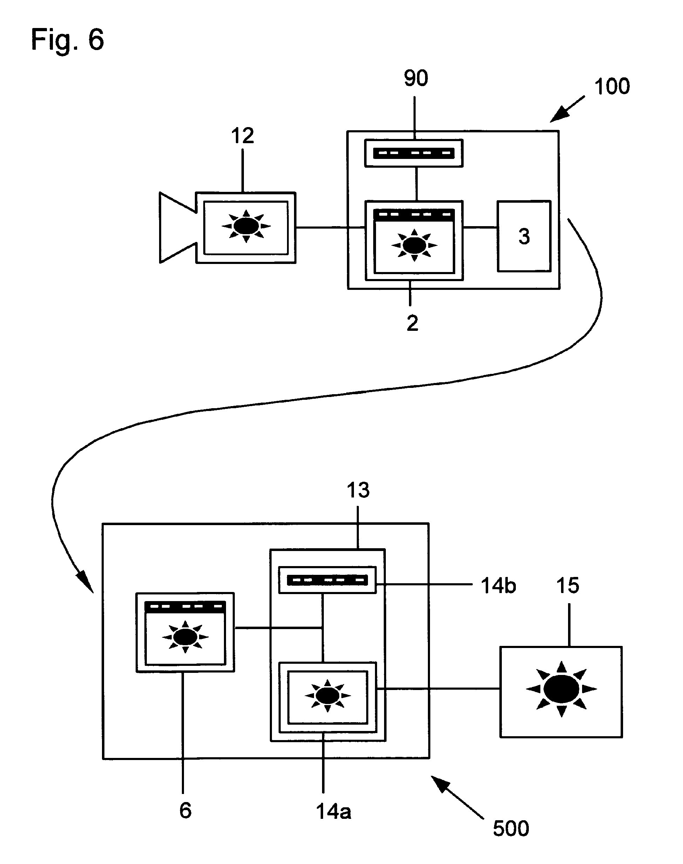

Figure 6 shows an exemplary transmission system according to the present invention that generates and transmits counting values as additional data. The transmission system according to this embodiment acts as a "video watchdog" that identifies frozen signals and, if wanted, warns a user upon detection of a signal freeze.

The transmission system comprises a video unit 100 and a main unit 500, which function as the transmitter and the receiver, respectively. The video unit 100 comprises a generating unit 2, a transmitting unit 3, and a counting value generator 90, which is connected to the generating unit 2 and generates counting values. Camera 12 captures images and delivers the image data to the video unit 100. In order to enable a user or the main unit 500 to identify frozen signals and thus to enable a user or the transmission system to react to frozen signals, the counting value generator 90 generates a progressing counting value, such as a time stamp or a frame number, and delivers the generated counting value to the generating unit 2. Using the supplied image and additional data, the generating unit 2 assigns the counting values to the received image data and generates a video signal by inserting the image data and the counting values into the corresponding parts of the image transmission area.

The assignment of the counting values to the image data can be performed in various ways. For example, the generating unit 2 may assign a counting value to each image captured by the video camera. Alternatively, the generating unit 2 may assign the counting values only to predefined images, for example, every 30^{th} image. However, the present invention is not restricted to these particular assignments and a skilled person is well aware that other ways of relating the counting values to the images are possible.

Afterwards, the generating unit 2 delivers the generated signals to the transmitting unit 3, which transmits the generated transmission signal via, for instance, radio wave, cable, or infrared to the main unit 500.

The main unit 500 comprises a data extraction unit 7 for extracting both the image and the additional data from the image transmission area and a graphic processor 13, which comprises two capture modules 14a and 14b for processing the extracted data. The data extraction unit 7 extracts the image data from the image transmission area and supplies the extracted image data to the first capture module 14a. Based on the extracted image data, the first capture module 14a generates image signals that are supplied to a display device 15, which in the following is supposed to be connected to the main unit 5 by cable. However, the main unit 5 might forward the image signals to the display device 15 by any other transmission means, such as, for example, wireless transmission, or even comprise the display device itself.

In addition, the data extraction unit 7 reads the counting values from the image transmission area and supplies the extracted data to the second capture module 14b, which evaluates the extracted counting value to identify a signal freeze.

For example, the second capture module 14b might store the received counting value in a memory (not shown) and compare the newly received counting value with the previously stored one. If the counting values do not change, the second capture module 14b causes the main unit 500 to indicate a signal freeze. In particular, the second capture module 14b might measure the time the value of the extracted counting does not change and indicate the signal freeze only if the measured time exceeds a predefined threshold. However, those skilled in the art will recognize that other ways of evaluating a counting value to identify a frozen signal exist.

In addition, a skilled person is well aware that various ways for indicating a signal freeze exist. For example, the second capture module 14b might generate image data that corresponds to the current value of the counter and forward the generated image data to the first capture module 14a, which visibly superimposes the generated image data on the image data received from the data extraction unit 7. In this case the current value of the counter is visible on the display device 16 and a viewer can easily recognize a frozen signal. To simplify the optical recognition of a signal freeze, the first capture module 14a may superimpose a warning message or a warning symbol on the image data supplied to the display device. Alternatively, the receiver might comprise a sound generator, such as a speaker, which generates a warning sound if a signal freeze is detected. In addition, the main unit 500 might forward a particular signal to an external device connected to the main unit 500, which informs the external device about a signal freeze. However, the present invention is not restricted to theses particular notification methods and other ways for indicating a signal freeze can be applied.

Figure 6 shows a main unit in which the data extractor and the image and additional data processing means are implemented as separated means. However, the present invention is not restricted to this particular configuration. For example, the main unit might comprise only a single capture unit, which processes both the image and the additional data. In addition, a capture module may also perform the extraction of the data from the image transmission area.

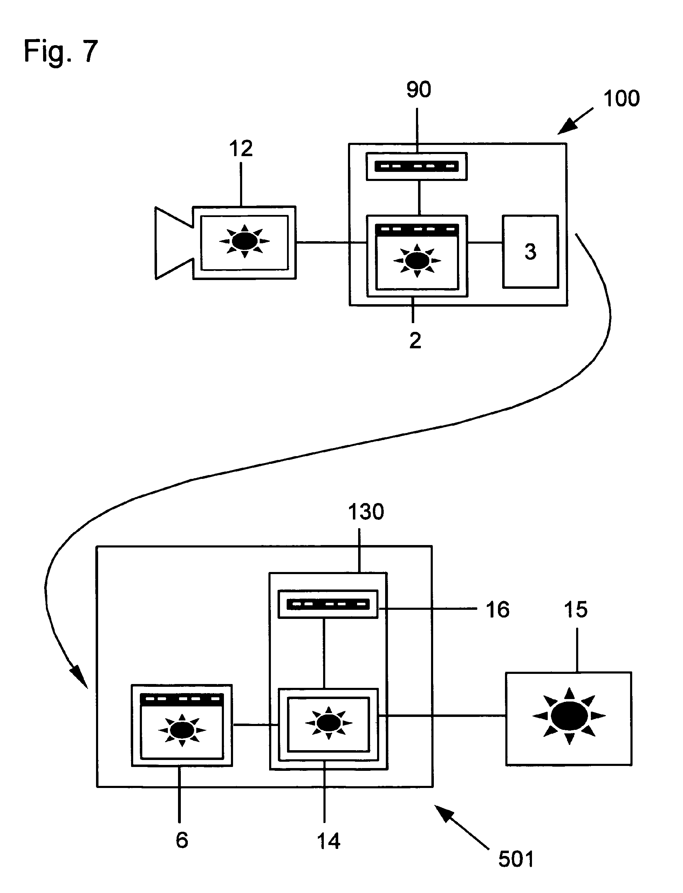

Figure 7 illustrates a transmission system according to the present invention in which the functions of the data extraction unit are included in the graphic processor 13. The transmission system comprises a video unit 100 and a main unit 501. While the video unit 100 corresponds to the video unit described in connection with Figure 6, the main unit 501 comprises a receiving unit 6 and a graphic processor 130 that comprises only a single capture module 14, which extracts and processes both the image data and the additional data. In addition, the graphic processor 130 comprises storage means 16 for storing data, such as transmitted counting values or processed image data.

As can be seen in Figure 7, the additional data contained in the transmitted video signal comprises a counting value, which is extracted and processed by the capture module 14. The capture module 14 evaluates the transmitted counting values as described in connection with Figure 6 to identify a signal freeze. Moreover, the capture module 14 extracts the transmitted image data and supplies the extracted image data to the display device 15.

So far the video unit has only been used to transmit counting values as additional data. However, in many applications it is required to transmit text information to a plurality of recipients. For example, a financial company involved in the stock market receives stock prices from various sources and wants to its employees about those stock prices that are important for the company. Since most offices are equipped with screens, which often are turned on in order to watch news programs about the latest financial developments, the present invention utilizes the transmission of the programs to add text information, such as, for example, stock prices or minor pieces of news, which can displayed on a small screen space of the display device as a news ticker, as additional data to the TV programs.

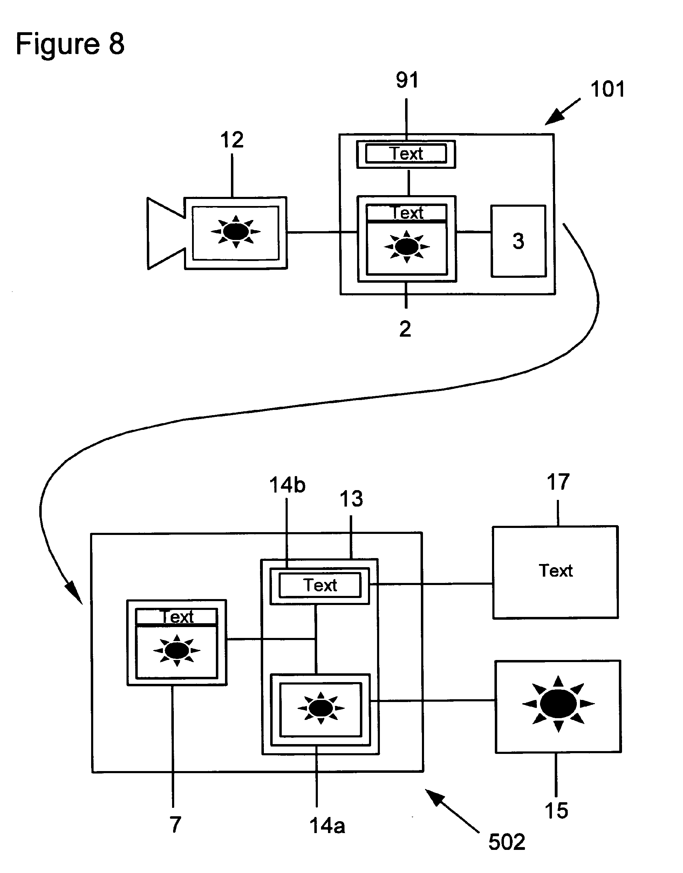

Figure 8 shows a transmission system according to the present invention that transmits text information as additional data along with image data. The transmission system comprises a video unit 101 and a main unit 502. The video unit 101 includes a generating unit 2 for generating the transmission signals and a transmitting unit 3 for transmitting the generated transmission signal. In addition, the video unit 101 comprises text generation means 91 for generating text information. The video unit 101 is connected to a camera 12, which provides the video unit 1 with image data. The generating unit 2 inserts the received image and the generated text information into the respective parts of the image transmission area and forwards the generated transmission signal to the transmitting unit 3, which transmits the transmission signal to the main unit 502.

The main unit 502 comprises a data extraction unit 7 and a graphic processor 13, which comprises a first and a second capture module 14a and 14b. The data extraction unit 7 extracts the image data and the text information from the received transmission signal and supplies the extracted data to the graphic processor 13. As described in connection with Figure 6, the first capture module 14a processes the received image data and forwards the processed image data to display device 15. The second capture module 14b processes the additional data and forwards the text information contained in the additional data to display device 17.

However, the present invention is not restricted to displaying the transmitted image data and the text information on separate display devices. Alternatively, the second capture module 14b can supply the processed text information to the first capture module 14a, which superimposes the received text information onto the transmitted image data. In this case, a second display for showing the transmitted text information is not necessary. In addition, the graphic processor may comprise only a single capture module, which processes and forwards both the image and the additional data. Moreover, the graphic processor may also perform the data extraction.

So far aspects regarding the security of the data transmission have not been taken into account. However, it is often required that the number of users who are able to view the transmitted image data should be restricted and an unauthorized user should not be able to display the transmitted image data.

For example, a company might transmit confidential video information via air from one building to another one. If an unauthorized person, such as a competitor of the company, knows the transmission frequency of the transmitted signal, he might be able to extract and display the transmitted image data using particular reception and data processing equipment.

In order to increase the security of the data transmission, i.e. to prevent unauthorized persons from viewing the transmitted image data, the present invention preferably transmits the image data in encrypted form.

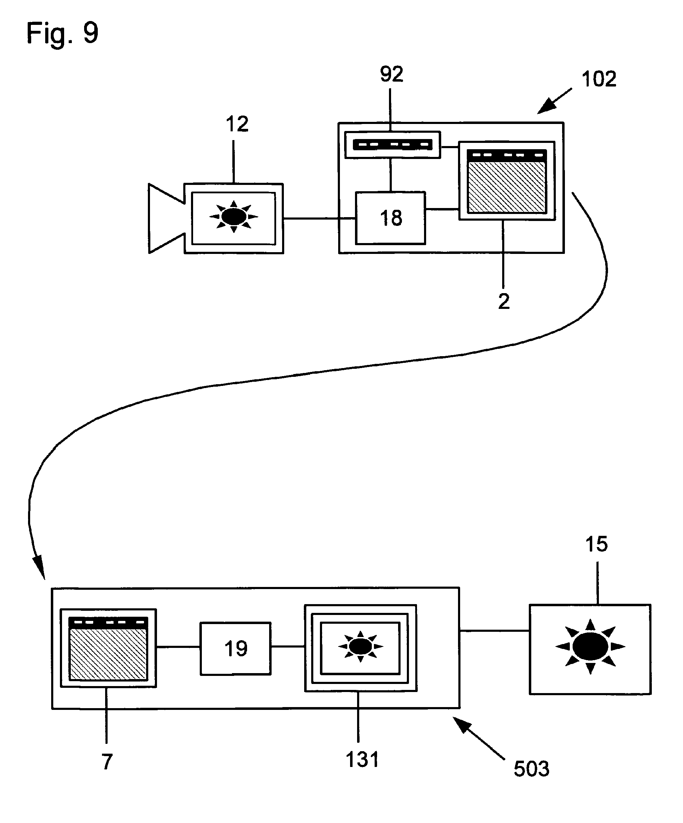

Figure 9 shows a transmission system, comprising a video unit 102 and a main unit 503 that encrypts the images before transmission. The video unit 102 comprises a generating unit 2, key generating means 92 for generating an encryption key, and image encryption means 18 for encrypting image data. The image encryption means 18 receives video data from camera 12 connected to the video unit 1, and encrypts the received the image data using an encryption key generated by the key generating means 92. After the encryption, the image encryption means 18 forwards the encrypted data to the generating unit 2, which inserts the data into the transmission signal.

In order to simplify the decryption of the encrypted image by the main unit 503, the generating unit 2 further inserts the decryption key required for the decryption of the encrypted image data into the transmission signal and transmits the decryption key as additional data.

Main unit 503 comprises an extraction unit 7, a graphic processor 131, and image decryption means 19. In addition, a display device 15 is connected to the main unit 503. In order to decrypt the transmitted image data, the extraction unit 7 extracts the encrypted image data and the decryption key from the image transmission area and forwards both to the image decryption means 19. The image decryption means 19 decrypts the encrypted image data with the supplied decryption key and supplies the decrypted image data to the graphic processor 131. The graphic processor 131 processes the received image data and forwards the processed image data to display device 15 for further display.

Depending on the employed encryption method, the decryption key can be generated in various ways. For example, if the image encryption means 18 applies a symmetric encryption method to encrypt the image data, the encryption and decryption keys are identical. Since it is not necessary to generate an extra decryption key in this case, the key generating means 92 simply forwards the generated encryption key to the generating unit 2. However, if the image encryption means 18 applies an asymmetric encryption method to encrypt the image data, the encryption key differs from the decryption key. In this case, the key generating means 92 generates the decryption key for the decryption of the image data, and forwards the generated decryption key to the generating unit 2.

Although Figure 9 depicts a transmitter that generates decryption and encryption keys, the present invention is not restricted to this particular configuration. In particular, it is not necessary that the video unit 102 creates encryption keys for the encryption of the image data itself. Alternatively, the video unit 102 may comprise key storage means instead of the key generating means 9b. The key storage means stores one or more encryption and decryption keys, which can be used to encrypt or decrypt the image data. However, in order to increase the security of the encryption, the video unit 102 may comprise both key storage means and key generating means 92. In this case, new encryption and decryption keys can be generated if an unauthorized person acquired the stored decryption keys. In addition, the image decryption means 18 may be included in the graphic processor 131 or in the extraction unit 7.

Although the encryption of the image data prevents a person not having the decryption key from viewing the transmitted images, he might still be able to extract the transmitted decryption key from the image transmission area using special equipment. Therefore, adding the decryption key can only prevent users having conventional video equipment from decrypting the image data. In order to increase the security of the data transmission, the present invention preferably encrypts the decryption key before it is inserted into the image transmission area.

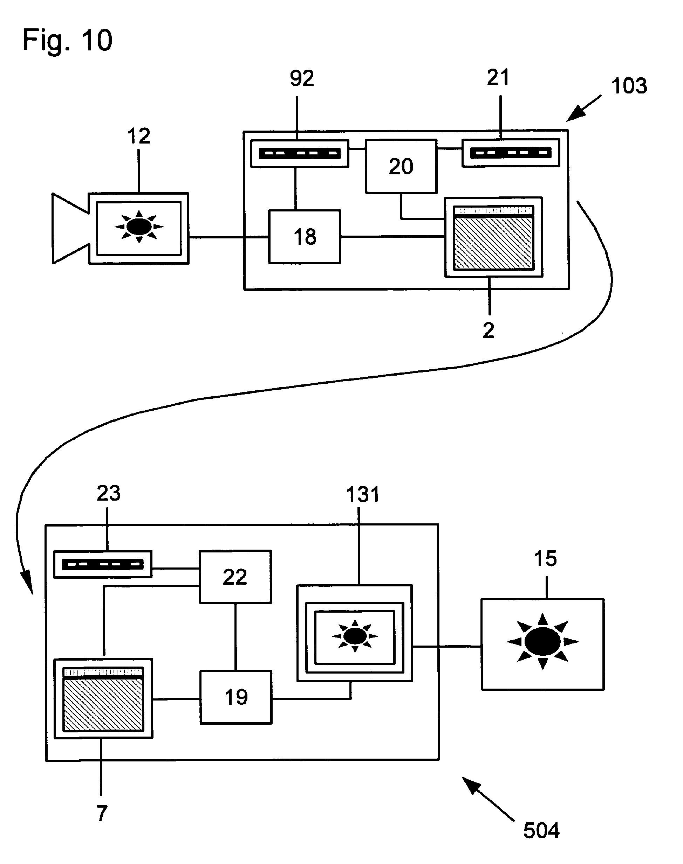

Figure 10 shows a transmission system, which transmits encrypted decryption keys as additional data. The transmission system comprises a video unit 103 and a main unit 504, wherein a camera 12 and a display device 15 are connected to the video unit 103 and the main unit 504, respectively. The video unit 103 comprises both image encryption means 18 and key encryption means 20, which encrypt image data and encryption keys, respectively. In addition, the video unit 103 includes a key generating unit 92 and a key storage unit 21 for storing an encryption key, such as the public key of a specific receiver or a group key relating to a group of receivers.

The image encryption unit 18 receives image data from camera 12 and encrypts the received image data with the encryption key generated by the key generating unit 92. In addition, the key encryption unit 20 encrypts the decryption key generated by the key generating unit 92 using a key stored in the key storage means 21. The generating unit 2 receives the encrypted image data and the encrypted decryption key and inserts both into the respective parts of the image transmission area of the transmission signal. Afterwards, the video unit 103 transmits the transmission signal to the main unit 504.

The main unit 504 includes an extraction unit 7, a graphic processor 131, image decryption means 19, and key decryption means 22, which decrypt image data and encrypted keys, respectively. In addition, the main unit 504 comprises key storage means 23 for storing a private key. The data extracting unit 7 extracts the encrypted key and the encrypted image data and supplies them to the key decryption means 22 and the image decryption means 19, respectively. The key decryption means 22 reads the private key from the key storage means 23 and decrypts the encrypted decryption key with the private key. Afterwards, the key decryption means 22 forwards the decrypted decryption key to the image decryption means 19, which decrypts the extracted encrypted image data with the received decryption key. The graphics processor 131 processes the decrypted image data and supplies the processed image data to display device 15 for further display.

In Figure 10 the key encryption and image encryption means have been depicted as separate units. However, the video unit 103 may instead comprise a single encryption device that encrypts both image data and keys. In the same way, the main unit 504 may comprise a single decryption unit that decrypts both the transmitted image data and the additional data.

Although the invention has been described in detail with reference only to preferred embodiments that represent the best mode for carrying out the present invention, they are not intended to illustrate all possible forms thereof. In particular, the transmitters, receivers, and transmission systems depicted in the figures do not illustrate independent embodiments of the present invention, but rather show different aspects of the present invention that can be combined if wanted.

In the previously described preferred embodiments only counters, news tickers, and encryption keys have been transmitted as additional data. However, the present invention is not restricted to these embodiments and all kinds of data can be transmitted as additional data. For example, the additional data may also comprise audio or radio signals, graphics, images, non-text information, interactive exercises, or combinations thereof.

In addition, the transmitter may comprise data processing means that process the generated or received image and additional data before the transmission signal is generated.

For example, since the video data and/or the additional data might be supplied to the transmitter in an analog format, while the transmission signal is digital, the transmitter may comprise digitizing means, such as an analog-digital converter, to digitize the analog data. In addition, the digitized data might be compressed by compressing means before it is supplied to the generating unit 2.

On the other hand, it could also happen that the additional data is supplied in digital form, while the transmission standard is analog. Therefore, the transmitter may comprise means, such as a digital-analog converter, for converting digital data into analog signals. Further, since the digital data might be received in compressed from, the transmitter may further include decompressing means for decompressing compressed digital data before it is supplied to the digital-to analog converter. In addition, to increase the applicability of the transmitter, it can comprise various combinations of the compressing means, decompressing means, digitizing means for digitizing analog signals and digital to analog converters for converting digital data.

Likewise, in order to increase its applicability, the receiver may also comprise digitizing means or digital to analog converters to convert a received analog or digital signal, respectively. In addition, the receiver can comprise compressing and decompressing means.

In addition, the transmitter may comprise an input unit that allows for the control of the transmitter. For example, if the transmitter comprises both means for receiving data from external devices and means for generating image or additional data, the input unit may enable a user to determine whether the image or additional data generated by the transmitter or the data obtained from an external device should be transmitted. Moreover, the input unit may be configured to enable a user to amend the partition of the image transmission areas in sub areas containing additional and image data or to define the resolution of the display device showing the transmitted images.

In the same manner, the receiver may comprise an input unit that allows for the control of the receiver. For example, if the receiver comprises both connectors and data processing means for processing the received additional and image data, the input unit may enable a user to determine whether the receiver or an external device processes the received data. In addition, the input unit may enable a user to amend the partition of the image transmission area or to define the resolution of the display device showing the transmitted images.

However, a skilled person is well aware that the input units included in the transmitter or in the receiver can be used to various other kinds of control operations and thus the present invention is not restricted to the above described control operations.

In addition, if the transmitter comprises both means for receiving data from external devices and means for generating image or additional data, the generating unit 2 may be configured to automatically insert the external data if the connecting unit 4 receives external data. In the same manner, if the receiver comprises both data processing means and connectors, the receiver may be configured to automatically supply the extracted image or additional data to an external device if such a device is connected to the receiver. However, the present invention is not restricted to this particular configuration. For example, as described before, the transmitter or the receiver can comprise an input unit that allows a user to determine what kind of data is processed by the generating unit 2 or if the receiver or an external device processes the received data.

Although, Figures 1 and 4 show a receiver that either generates both image and additional data or receives both kinds of data from an external device, the present invention is not restricted to this configuration. For example, the receiver might only comprise an image capturing unit 11 but receive the additional data from an external device. In addition, as shown in Figures 6 to 9, the receiver might receive the image data from an external device, but generate the additional data itself.

Moreover, it is not necessary that the transmitter receives data from a camera or uses an internal camera to capture the image data. The transmitter may receiver the image data from an arbitrary external device or read the image data from an external or internal storage medium, such as, for instance, a DVD-ROM, a hard drive, or the like, and insert the image data into the transmission signal.

In addition, the transmitter and the receiver may comprise storage means for storing data, such as, for example, control programs for controlling the individual components of the transmitter and apparatus, respectively. In particular, control programs can be easily be updated by connecting the transmitter or the receiver to an external device via their connection means. The storage means might be embodied as a central storage unit that stores all data. Alternatively, the individual components of the transmitter or receiver may comprise their own internal memory, which stores the data required or generated by the component, and a central storage unit is not provided. In addition, it is possible that the transmitter and the receiver comprise a central memory unit, which can be accessed by their components, while some components comprise their own internal memories as well.

Although the present invention has been described in connection with television broadcasting and security systems, the present invention is not restricted to these application areas. The present invention may be applied, for instance, as part of the data transmission system of companies or in cars as part of the car entertainment system or as part of the parking distance control system. However, the present invention can be applied in any field that relies on the combined transmission of image and additional data.

Moreover, it is not necessary that the transmitted text information is displayed on a display device. The receiver may forward the extracted text information to a data processing device, which processes the text information.

To increase the security for the transmission of the image data, the key-generating unit may generate a security key that differs from the decryption key but enables a further key generating means included in the receiver to generate the decryption key. In this case, the generating unit 2 inserts the security key as additional data into the transmission signal. In addition, in order to use the transmitted security key, the receiver may comprise key generating means that generates the description key based on the received security key. For example, if the decryption key is generated by a random number generator, the security key could comprise the parameter, such as, for example, a starting value, needed by a random number generator to generate the decryption key. The receiver extracts the transmitted parameters and generates the decryption key based on the parameters.

In addition, it is not required, that all images of the transmission signal are encrypted with the same encryption key. The transmitter may change the used encryption key after predefined or random time intervals. Since the decryption key is transmitted along with the image data, the receiver can easily accommodate to a change of the encryption key.

Although the above-described method of transmitting and receiving additional data has been explained by using the ITU-R BT.656-3 and ITU-R BT.656-4 standards, the above-described method is intended to be used with any transmission standard. The main advantage is that pictures can be transmitted over the same transmission channels as are currently in use and can still be received on conventional receivers.

Summarizing, the present invention provides an improved method for the combined transmission of image and additional data. The present invention generates a transmission signal that includes an image transmission area, which is applied for the transmission of both the image and additional data. In order to transmit image and additional data without interference between these different kinds of data, the present invention takes the resolution of a display device that displays the transmitted video data into account when generating the transmission signal. I n particular, the size of the transmission area is set so that it provides more space than actually is required for the transmission of an image having a resolution matching the resolution of the display device. Therefore, it is not necessary to superimpose the additional data onto the image data or to transmit image having a resolution being smaller than the resolution of the display device.

## Claims

1. A data transmission method for transmitting video data in form of a sequence of images and additional data to a receiving apparatus for processing said additional data and for display of said video data on a display device, wherein the resolution of each image of said sequence of images corresponds to the resolution of said display device, the method comprising the steps of:
generating a transmission signal, said transmission signal providing a predefined image transmission area for each image of said image sequence, wherein the size of each of said image transmission areas being larger than the respective image of said image sequence, and the image and additional data are inserted into predefined parts of said image transmission area;
transmitting the transmission signal to said receiving apparatus;
receiving the transmission signal by said receiving apparatus;
extracting the video data from the received transmission signal for display of said video data on said display device; and
extracting the additional data from the received transmission signal for further processing of said extracted additional data.

2. A data transmission method according to claim 1, wherein the image data and the additional data are provided in form of two-dimensional pixel data arranged in column and lines.

3. A data transmission method according to claim 2, wherein a first predefined number of lines of pixel data of each transmission area is provided for image data and a second predefined number of lines of pixel data of each transmission area is provided for additional data.

4. A transmission method according any of claims 1 to 3 further comprising the step of adjusting the size of the images to be transmitted to the resolution of the display device before generating the transmission signal.

5. A transmission method according to any of claims 1 to 4 further comprising the steps of
creating a counting value for each image;
transmitting the counting values as additional data; and
evaluating the transmitted counting values to identify a signal freeze.

6. A transmission method according to claim 5 further comprising the step of indicating a signal freeze if the transmitted counting values do not change for a predefined period of time.

7. A transmission method according to any of claims 1 to 6, wherein the additional data comprises text information and the method further comprises the step of displaying the transmitted text information.

8. A transmission method according to claim 7 wherein the text information is displayed on a further display device.

9. A transmission method according to any of claims 7 to 8, wherein the text information is a news ticker.

10. A transmission method according to any of claims 1 to 9, further comprising the steps of
encrypting each image of said image sequence; and
decrypting the transmitted video data using a decryption key contained in the additional data.

11. A transmission method according to claim 10, further comprising the steps of
encrypting the decryption key before generating the transmission signal;
decrypting the transmitted encrypted decryption key.

12. A data transmission system for transmitting video data in form of a sequence of images and additional data from a transmitting apparatus (1) to a receiving apparatus (5) for processing said additional data and for display of said video data on a display device (15), wherein the resolution of each image of said sequence of images corresponds to the resolution of said display device, wherein
the transmission apparatus (1) transmitting a generated transmission signal to said receiving apparatus (5) comprises a generating unit (2) for generating the transmission signal, said transmission signal providing a predefined image transmission area for each image of said image sequence, wherein the size of each of said image transmission areas being larger than the respective image of said image sequence, and the generating unit (2) is adapted to insert the image and additional data into predefined parts of said transmission area; and
the receiving apparatus (5) comprises:
a receiving unit (6) for receiving the transmission signal;
a first extraction unit (7a) for extracting the video data from the received transmission signal for display of said video data on said display device (15); and
a second extraction unit (7b) for extracting the additional data from the received transmission signal for further processing of said additional data.

13. A data transmission system according to claim 12, wherein the image data and the additional data are provided in form of two-dimensional pixel data arranged in column and lines.

14. A data transmission system according to claim 13, wherein a first predefined number of lines of pixel data of each transmission area is provided for image data and a second predefined number of lines of pixel data of each transmission area is provided for additional data.

15. A data transmission system according to any of claims 12 to 14, wherein the transmission apparatus (1) further comprises a resize unit for adjusting the size of the images to be transmitted to the resolution of the display device (15) before generating the transmission signal.

16. A data transmission system according to any of claims 12 to 15 further comprising a counting value generator (90) for generating a counting value for each image of said sequence of images, wherein the additional data contains the generated counting values.

17. A data transmission system according to any of claims 12 to 16, wherein the receiving apparatus (5) further comprises:
a video data processing unit (14a) for processing the extracted video data; and
an additional data processing unit (14b) for processing the extracted additional data.

18. A data transmission system according to claim 17 wherein the additional data processing unit (14b) is adapted to evaluate counting values contained in the additional data to identify a signal freeze.

19. A data transmission system according to claim 18 wherein the additional data processing unit (14b) is adapted to indicate a signal freeze if the transmitted counting values do not change for a predefined period of time.

20. A transmission method according to any of claims 12 to 19, wherein the additional data comprises text information and the receiving apparatus (5) is adapted to display the transmitted text information.

21. A transmission method according to claim 20 wherein the receiving apparatus (5) is adapted to display text information on a further display device (17).

22. A transmission method according to any of claims 20 to 21, wherein the text information is a news ticker.

23. A transmission method according to any of claims 12 to 22, wherein
the transmission apparatus (1) further comprises a video encryption unit (18) for encrypting each image of said image sequence, wherein the generating unit (2) is adapted to insert the decryption key as additional data; and
the receiving unit (5) further comprises a video data decryption unit (19) for decrypting video data, wherein the decryption unit (19) is adapted to decrypt the extracted video data with the extracted decryption key.

24. A transmission method according to claim 23, wherein
the transmission apparatus (1) further comprises a key encryption unit (20) for encrypting the decryption key transmitted as additional data; and
the receiving apparatus (5) further comprises a key decrypting unit (22) for decrypting encrypted decryption keys contained in the additional data.
